# EUROPEAN PATENT APPLICATION

(11) **EP 2 128 749 A2**
(43) Date of publication of application: **02.12.2009**
(21) Application number: 09161270.5
(22) Date of filing: 27.05.2009
(51) Int. Cl.: G06F 3/048

(54) **Mobile terminal and information display method**

(30) Priority: 27.05.2008 JP 2008138369
(71) Applicant: NTT DoCoMo, Inc., Chiyoda-Ku Tokyo 100-6150 (JP)
(72) Inventor: Yamazaki, Hitoshi, Tokyo 100-6150 (JP); Anzawa, Kazuya, Tokyo 100-6150 (JP); Endo, Kentaro, Tokyo 100-6150 (JP); Kamiya, Toshihiko, Tokyo 100-6150 (JP)
(74) Representative: Beder, Jens

(57) **Abstract**

The present invention provides a mobile terminal having a touch panel, which is capable of improving the convenience and operability of an input operation or information display. The mobile terminal having a touch panel (11) includes an input control unit that receives character data from a user via the touch panel (11), a conversion candidate creating unit that creates a conversion candidate list (31) corresponding to the character data, and a screen display control unit that displays the conversion candidate list (31) on a conversion candidate display region (23) of the touch panel (11), and, when the conversion candidate list (31) cannot be displayed completely on the conversion candidate display region (23) of the touch panel (11), scroll-displays the conversion candidate list (31) displayed on the conversion candidate display region (23) during contact movement (L1) in which a finger of the user continues moving on the touch panel (11) without having a contact state therebetween disconnected, in accordance with the contact movement.

## Description

### BACKGROUND OF THE INVENTION

### Field of the Invention

The present invention relates to a mobile terminal having a touch panel, and an information display method using this mobile terminal.

### Related Background Art

A user interface that uses a touch panel in place of a conventional hardware keyboard or numeric key is expected to be mounted in a field of mobile terminals such as mobile phones and PDA (Personal Digital Assistant). This user interface allows character input and other input operation, as well as information display using a software keyboard displayed on the touch panel.

In a mobile terminal, on the other hand, it is preferred that the area of the device for a user interface be small due to the restriction on the size of the mobile terminal. As described in Japanese Patent Application Laid-Open No. 2006-323664 (Patent Reference 1), for example, a method for using a touch sensor to execute an operation in response to a contact position or contact operation (pressing, stroking, etc.) within a touch sensor performed by a user is known.

However, in the mobile terminal in which the user interface using the touch panel is mounted, a software keyboard is displayed on a display. For this reason, there is a restriction on an input operation or information display, and only a few of conversion candidates are displayed when, for example, inputting characters, causing a problem in the convenience of the mobile terminal.

Therefore, with the touch sensor described in Patent Reference 1, information to be displayed can be scroll-displayed by, for example, stroking the touch sensor in one direction with a finger of the user. As a result, the restriction on the input operation or information display might be alleviated. However, in the technology described in Patent Reference 1, because the size of the region of the touch sensor cannot be increased due to the restriction on the size of the mobile terminal, the touch sensor needs to be repeatedly stroked in order to increase the scrolling increment, causing a problem in the operability of the mobile terminal.

### SUMMARY OF THE INVENTION

An object of the present invention, therefore, is to solve the problems described above and provide a mobile terminal having a touch panel, which can improve the convenience and operability of an input operation and information display, and an information display method using this mobile terminal.

In order to solve the problems described above, a mobile terminal of the present invention is a mobile terminal having a touch panel, including: input receiving means for receiving input data from a user via the touch panel; information creation means for creating information corresponding to the input data received by the input receiving means; information display means for displaying the information created by the information creation means, on a predetermined region of the touch panel; and display control means for, when the information created by the information creation means cannot be displayed completely on the predetermined region of the touch panel, scroll-displaying the information displayed on the predetermined region, during contact movement in which a finger of the user continues moving on the touch panel without having a contact state therebetween disconnected, in accordance with the contact movement.

Similarly, in order to solve the problems described above, an information display method of the present invention is an information display method that uses a mobile terminal having a touch panel, the information display method including: an input receiving step of receiving input data from a user via the touch panel; an information creation step of creating information corresponding to the input data received in the input receiving step; an information display step of displaying the information created in the information creation step, on a predetermined region of the touch panel; and a display control step of, when the information created in the information creation step cannot be displayed completely on the predetermined region of the touch panel, scroll-displaying the information displayed on the predetermined region, during contact movement in which a finger of the user continues moving on the touch panel without having a contact state therebetween disconnected, in accordance with the contact movement.

According to this configuration, when the information created in response to the input data from the user cannot be displayed completely on the predetermined region of the touch panel, the information displayed on the predetermined region is scroll-displayed in accordance with contact movement of the user during the contact movement. As a result, the scrolling operation can be performed easily without imposing a restriction on the region or track where a scroll display operation is received. Accordingly, the convenience and operability of the input operation or information display performed by the mobile terminal can be improved.

In the mobile terminal of the present invention, when the information cannot be displayed completely on the predetermined region of the touch panel, it is preferred that the display control means display, on the touch panel, a scroll button that serves as a trigger for starting to scroll-display the information and determines the direction for scroll-displaying the information, and, when the user performs a contact operation on the scroll button, scroll-display the information displayed on the predetermined region, during the contact movement following the contact operation, in accordance with the contact movement.

According to this configuration, during the contact movement performed by user, the information displayed on the predetermined region is scroll-displayed in the direction determined by the scroll button. As a result, the information can be scroll-displayed in a predetermined direction only, even when the user uses any track to contact-move his/her finger on the touch panel. Accordingly, the convenience and operability of the input operation or information display performed by the mobile terminal can be improved.

In the mobile terminal of the present invention, the direction for scroll-displaying the information, which is determined by the scroll button, is preferably selected arbitrarily.

According to this configuration, the information displayed on the predetermined region is scroll-displayed in any direction determined by the scroll button. As a result, the user can select any scrolling direction and promptly reach the desired information. Accordingly, the convenience and operability of the input operation or information display performed by the mobile terminal can be improved.

In the mobile terminal of the present invention, it is preferred that the input data be character data, and that the information be a conversion candidate corresponding to the character data, so that they can be effective particularly when creating an electronic mail or performing other character input operations.

According to the mobile terminal and the information display method using the mobile terminal of the present invention, convenience and operability of the input operation performed by the mobile terminal can be improved in the mobile terminal having a touch panel.

### BRIEF DESCRIPTION OF THE DRAWINGS

FIG. 1 is a perspective view of a mobile terminal according to an embodiment of the present invention;
FIG. 2 is a functional block diagram of the mobile terminal shown in FIG. 1;
FIG. 3 is a diagram showing an example of a display screen of a touch panel shown in FIG. 1;
FIG. 4 is a flowchart showing character input processing executed by the mobile terminal according to the embodiment;
FIG. 5 is a diagram schematically showing how conversion candidates are scroll-displayed in the character input processing shown in FIG. 4;
FIG. 6 is a diagram schematically showing how the conversion candidates are scroll-displayed in the character input processing shown in FIG. 4;
FIG. 7 is a diagram schematically showing how the conversion candidates are scroll-displayed in the character input processing shown in FIG. 4;
FIG. 8 is a diagram schematically showing how the conversion candidates are scroll-displayed in the character input processing shown in FIG. 4; and
FIG. 9 is a diagram showing a scrolling direction of a conversion candidate list in the character input processing shown in FIG. 4.

### DESCRIPTION OF THE PREFERRED EMBODIMENTS

A suitable embodiment of the mobile terminal and an information display method using the mobile terminal according to the present invention is described hereinafter with reference to the drawings. Note in the following embodiment that how conversion candidates are scroll-displayed in a character input operation is described as an example of the information display method using the mobile terminal.

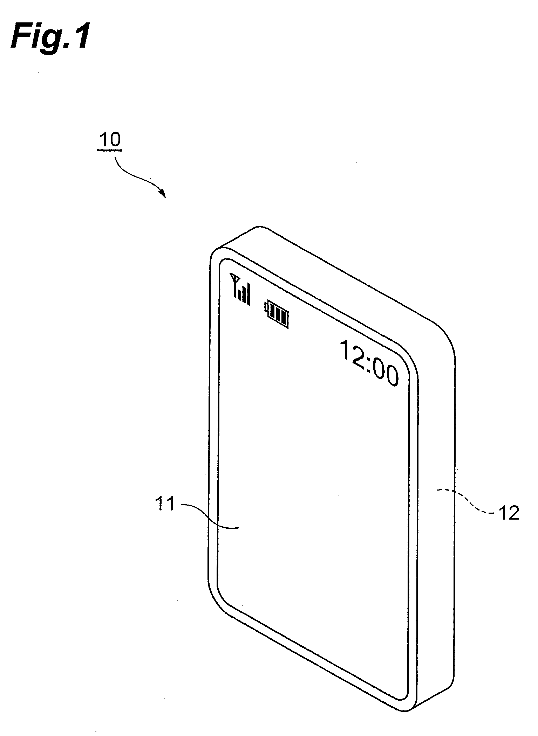

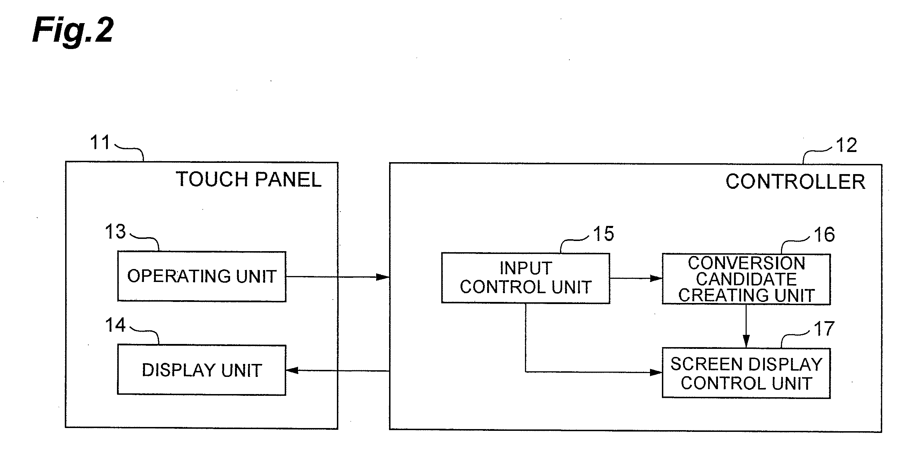

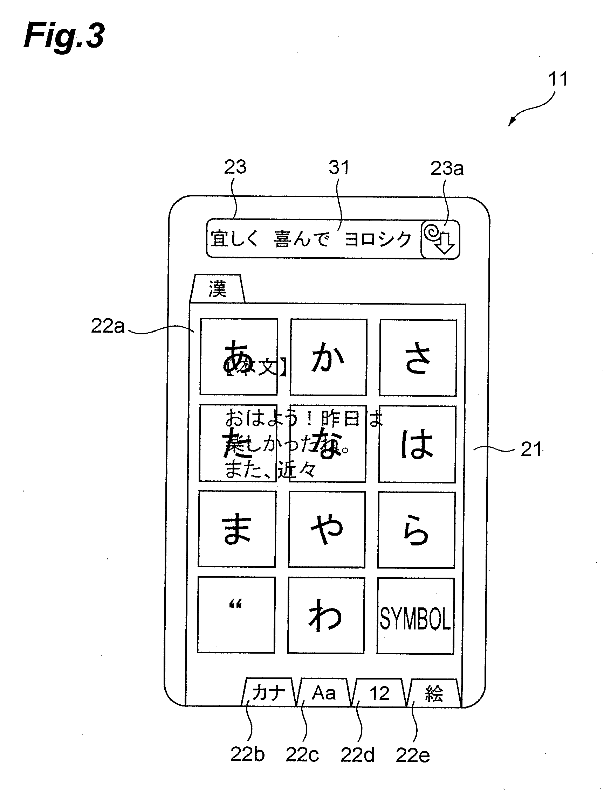

First, a configuration of the mobile terminal according to the present embodiment is described. FIG. 1 is a perspective view of a mobile terminal according to the embodiment. FIG. 2 is a functional block diagram of the mobile terminal shown in FIG. 1. FIG. 3 is a diagram showing an example of a display screen of a touch panel shown in FIG. 1.

As shown in FIG. 1, a mobile terminal 10 of the present embodiment has a touch panel 11 that occupies the majority of a main body front surface, and a controller 12 in a main body internal part. Unlike a mobile phone that has a conventional hardware numeric keypad, this mobile terminal 10 uses the touch panel 11 so that an input operation for inputting characters is performed in conjunction with information display performed in response to the input operation.

The touch panel 11 has an operating unit 13 and a display unit 14, as shown in FIG. 2. The operating unit 13 detects the position where a finger of a user or a touch pen (stylus) is in contact with the touch panel 11. Specifically, the operating unit 13 is a panel member that is made of a transparent material or the like and attached to the surface of the display unit 14 in a state in which a display screen of the display unit 14 is visible. Examples of the method for detecting the contact position include a matrix switch scheme, a capacitance scheme, an optical scheme, a pressure sensitive scheme, and an electromagnetic induction scheme. The operating unit 13, once detecting the contact position of the user, transmits positional information to the controller 12. The display unit 14 specifically is a liquid crystal display or an organic EL display for presenting various information received from the controller 12 to the user.

A screen shown in FIG. 3 is displayed on the touch panel 11 as a standard screen during a character input operation. As shown in FIG. 3, a text sheet 21 for displaying an input character string is disposed on the standard screen of the touch panel 11, and a " 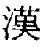 " sheet ("KANJI" sheet) 22a for inputting a Chinese character (KANJI) and a hiragana character is disposed such that the text sheet 21 is overlapped (overlaid) thereon.

The "KANJI" sheet 22a is provided with twelve software keys as in a numeric keypad of a conventional mobile phone. Each of the keys corresponds to each section of the Japanese syllabary composed of " 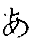 " section to " 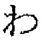 " section, a punctuation mark, or a symbol. When the user touches the region of any of these keys on the touch panel 11 by means of his/her finger, the characters corresponding to the key are selected and displayed on the text sheet 21.

Furthermore, tabs of " 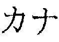 " sheet ("KANA" sheet) 22b for inputting katakana characters, "Aa" sheet 22c for inputting the Roman characters, "12" sheet 22d for inputting numerals, and " 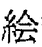 " sheet ("EMOJI" sheet) 22e for inputting pictographic characters are disposed as the other character input sheets on a lower end of the standard screen. Each of these sheets 22b to 22e is also provided with twelve software keys, as with the "KANJI" sheet, and associated with different types of characters. When the user touches any of the tabs of the "KANA" sheet 22b, "Aa" sheet 22c, "12" sheet 22d, and "EMOJI" sheet 22e on the touch panel 11 by means of his/her finger and slides the tab upward while keeping this contact state, the sheet of this tab is pulled out of the lower side of the screen so that the sheet is disposed on the forefront surface of the screen.

In this manner, the character input sheets 22a to 22e are overlaid on the text sheet 21 and displayed using the entire screen of the touch panel 11, and the size of the keys of each sheet is made large to prevent incorrect input. Moreover, when overlaid on the text sheet 21, the character input sheets 22a to 22e are, for example, displayed translucently in relation to the text sheet 21 so that the user can always view the text sheet 21.

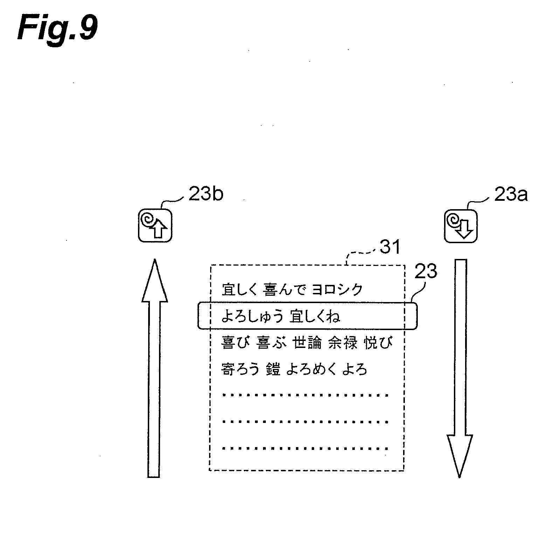

Moreover, when the characters are input using the abovementioned character input sheets 22a to 22e on the screen of the touch panel 11 shown in FIG. 3, a conversion candidate list 31 (see FIG. 9) corresponding to the input character string is displayed on a conversion candidate display region 23 in the upper part of the screen. Because the character input sheets 22a to 22e are disposed on the entire screen of the touch panel 11 as described above, the size of the conversion candidate display region 23 is restricted. Therefore, when the conversion candidate list 31 cannot be displayed completely on the conversion candidate display region 23, a scroll button 23a is displayed on the right end of the conversion candidate display region 23 after a displayable part of the conversion candidate list 31 is displayed. This scroll button 23a is a trigger for starting to scroll-display the conversion candidate list 31 displayed on the conversion candidate display region 23, and determines a downward direction as the direction of scroll-display.

In place of the downward direction scroll button 23a shown in FIG. 3, a reverse scroll button 23b that serves as a trigger for starting to perform the scroll-display in an upward direction is sometimes displayed on the conversion candidate display region 23. The detail of the scroll-displayed on the conversion candidate list 31 that is performed by the scroll button 23a and the reverse scroll button 23b is described hereinafter.

Referring to FIG. 2 again, the controller 12 is configured by an input control unit (input receiving means) 15, a conversion candidate creating unit (information creation means) 16, and a screen display control unit (information display means, display control means) 17.

The input control unit 15 receives input data from the user via the operating unit 13 of the touch panel 11. More specifically, the input control unit 15 recognizes which one of the character input sheets 22a to 22e is displayed on the touch panel 11, by, for example, receiving a current displayed content from the screen display control unit 17, and identifies the type of the input character in accordance with which button of the currently displayed character input sheet is touched by the user and how many times the button is touched. The input control unit 15 then transmits the character data input by the user to the conversion candidate creating unit 16 and the screen display control unit 17.

Upon detection of a contact between the user and the scroll button 23a or the reverse scroll button 23b, the input control unit 15 transmits, to the screen display control unit 17, the fact that the input control unit 15 detects the trigger for starting to scroll-display the conversion candidate display region 23.

The conversion candidate creating unit 16 creates the conversion candidate list 31 corresponding to the character data received by the input control unit 15. More specifically, once receiving the character data from the input control unit 15, the conversion candidate creating unit 16 predicts a word that has the character data as the initial character. Moreover, in consideration of a past selection history, the conversion candidate creating unit 16 determines an order of candidates in response to the tendency of the user, and creates the conversion candidate list 31. The conversion candidate creating unit 16 then transmits the created conversion candidate list 31 to the screen display control unit 17.

The screen display control unit 17 uses the input data received from the input control unit 15 and the conversion candidate list 31 received from the conversion candidate creating unit 16, to control the configuration of the screen displayed on the display unit 14 of the touch panel 11. More specifically, the screen display control unit 17 controls the configuration of the screen of the display unit 14 such as (1) displaying the characters corresponding to any key of the character input sheets 22a to 22e on the text sheet 21 when the user touches this key, and displaying the conversion candidate list 31 predicted from the character on the conversion candidate display region 23 (2) displaying the scroll button 23a or the reverse scroll button 23b on the conversion candidate display region 23 when the conversion candidate list 31 cannot be displayed completely on the conversion candidate display region 23, and (3) upon detection of a so-called "contact movement" in which the user touches the scroll button 23a or the reverse scroll button 23b to continuously move on the touch panel 11 without having the contact state with the touch panel 11 disconnected, scroll-displaying the conversion candidate list 31 displayed on the conversion candidate display region 23, in accordance with the movement.

The controller 12 is configured physically by a CPU (central processing unit), RAM (random access memory), ROM (read only memory), and other hardware. The functions of the input control unit 15, conversion candidate creating unit 16 and screen display control unit 17 configuring the controller 12 are realized by causing the CPU, RAM and other hardware to read a predetermined computer software to operate the operating unit 13 and display unit 14 of the touch panel 11 under the control of the CPU, and by reading and writing the data stored in the RAM or ROM.

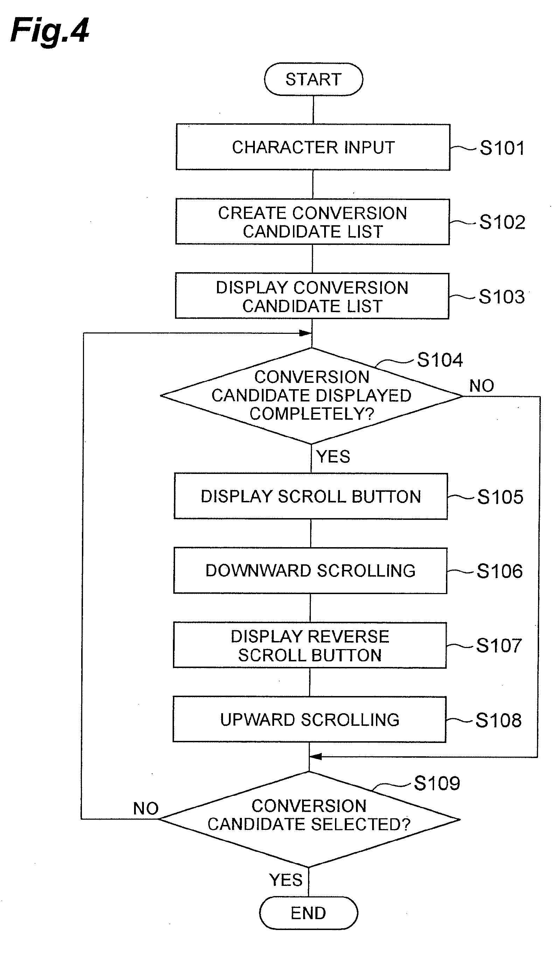

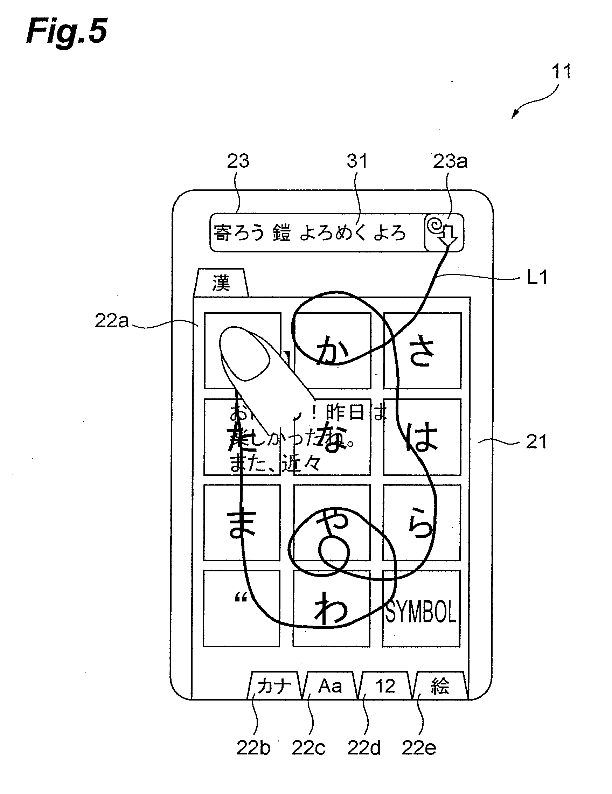

Next, the operation of the mobile terminal 10 according to the present embodiment and the information display method using the mobile terminal 10 according to the present embodiment are described. FIG. 4 is a flowchart showing character input processing executed by the mobile terminal 10 according to the embodiment. FIGS. 5 to 8 are each a diagram schematically showing how conversion candidates are scroll-displayed in the character input processing shown in FIG. 4. FIG. 9 is a diagram showing a scrolling direction of the conversion candidate list in the character input processing shown in FIG. 4.

As shown in FIG. 4, when the character input operation is started in the mobile terminal 10 according to the present embodiment, first, the operating unit 13 of the touch panel 11 detects information on the position on the touch panel touched by the user, and this positional information is transmitted to the controller 12. In the controller 12, the input control unit 15 applies this positional information to the character input sheets 22a to 22e that are currently displayed on the display unit 14, whereby the character data input by the user is specified (S101: input receiving step).

Next, the specified character data is transmitted to the conversion candidate creating unit 16. The conversion candidate creating unit 16 predicts a word having this character data as the initial character, determines an order of candidates in response to the tendency of the user in consideration of the past selection history of the user, and creates the conversion candidate list 31 (S102: information creation step). The present embodiment explains, hereinafter, an example of creating the conversion candidate list 31 in which " 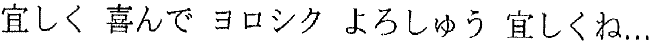 " are arranged in this order as shown in FIG. 9, when the user inputs a character such as " 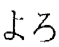 " by using the "KANJI" sheet 22a. The created conversion candidate list 31 is transmitted to the screen display control unit 17.

Next, the screen display control unit 17 displays the conversion candidate list 31 on the conversion candidate display region 23 of the display unit 14 of the touch panel 11 (S103: information display step), and confirms whether or not the conversion candidate list 31 is displayed completely on the conversion candidate display region 23 (S104). When it is determined that the conversion candidate list 31 is displayed completely on the conversion candidate display region 23, the processing moves to step S109.

When it is determined in step S104 that the conversion candidate list 31 is not displayed completely on the conversion candidate display region 23, the scroll button 23a is displayed on the conversion candidate display region 23, as shown in FIG. 5 (S105: display control step). In the present embodiment, because only " 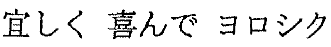 " in the first row of the conversion candidate list 31 is displayed on the conversion candidate display region 23, the scroll button 23a is displayed on the conversion candidate display region 23 along with this row, as shown in FIGS. 3 and 9.

Then, when the operating unit 13 and the input control unit 15 detect a contact operation performed on the scroll button 23a by the user using, for example, his/her finger, and further detect a so-called contact movement operation in which, following the contact operation, the finger continuously moves on the touch panel 11 without having the contact state between the finger and the touch panel 11 disconnected as shown by a track L1 of FIG. 5, the screen display control unit 17 scroll-displays the conversion candidate list 31 downward as shown in FIG. 9, the conversion candidate list 31 being displayed on the conversion candidate display region 23 (S106: display control step). This scroll-display is continued until the operating unit 13 and the input control unit 15 detect that the user removes his/her finger from the touch panel 11.

In the scroll-display processing performed in step S106, the screen display control unit 17 determines the scrolling increment in accordance with, for example, the distance of the contact track L1 on the touch panel 11, and further determines the scrolling speed in accordance with the speed of the movement. In the example shown in FIG. 5, the conversion candidates displayed on the conversion candidate display region 23 are scrolled downward from " 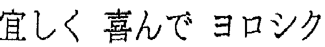 " in the first row of the conversion candidate list 31 shown in FIG. 9 to " 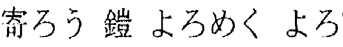 " in the fourth row in accordance with the distance of the contact track L1 on the touch panel 11.

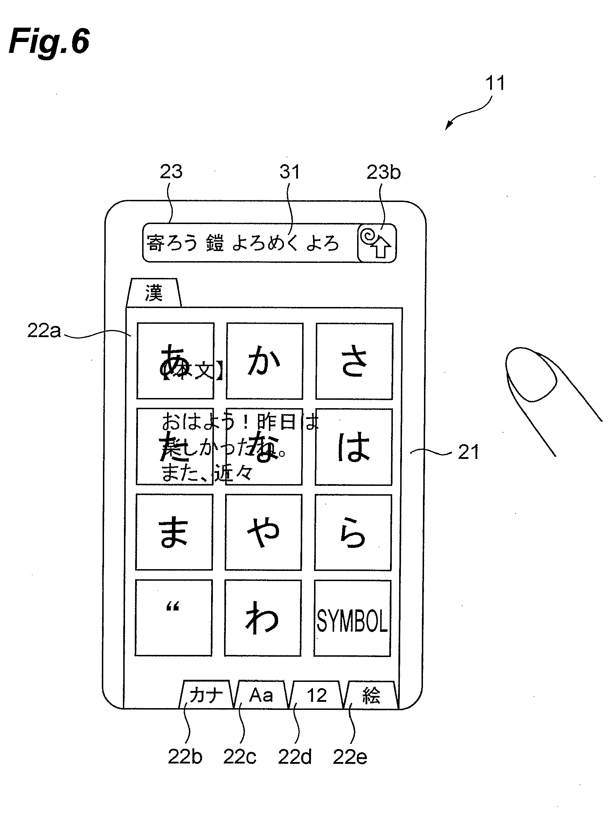

Next, when the user removes his/her finger from the touch panel 11 to stop the downward scroll-display of the conversion candidate list 31, the screen display control unit 17 replaces the scroll button 23a displayed on the conversion candidate display region 23, with the reverse scroll button 23b serving a trigger for upward scroll-display, as shown in FIG. 6 (S107).

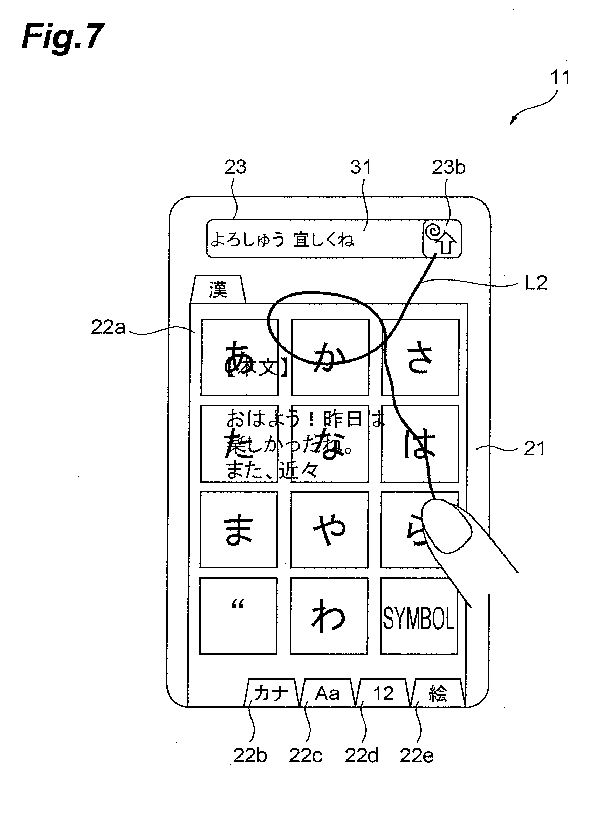

Then, when the operating unit 13 and the input control unit 15 detect a contact operation performed on the reverse scroll button 23b by the user using, for example, his/her finger, and further detect a contact movement operation shown by a contact track L2 in FIG. 7 subsequently to the contact operation, the screen display control unit 17 scroll-displays the conversion candidate list 31 upward as shown in FIG. 9, the conversion candidate list 31 being displayed on the conversion candidate display region 23 (S108). This scroll-display is continued until the operating unit 13 and the input control unit 15 detect that the user removes his/her finger from the touch panel 11.

In the example shown in FIG. 7, the conversion candidates displayed on the conversion candidate display region 23 are scrolled upward from " 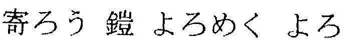 " in the fourth row of the conversion candidate list 31 shown in FIG. 9 to " 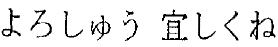 " in the second row in accordance with the distance of the contact track L2 on the touch panel 11.

The operating unit 13 and the input control unit 15 confirm whether or not the user selects a conversion candidate from the conversion candidate list 31 displayed on the conversion candidate display region 23 (S 109). When it is determined that the user does not select a conversion candidate, the processing returns to step S104, and the processing in step S104 to S108 for scroll-displaying the conversion candidate list 31 is repeated.

In other words, until the user selects a conversion candidate from the conversion candidate list 31, the scroll button 23a and the reverse scroll button 23b are alternately displayed on the conversion candidate display region 23 every time the conversion candidate list 31 is scrolled, and the scrolling direction of the conversion candidate list 31 is switched inversely. Note that the scroll button 23a and the reverse scroll button 23b are switched and displayed also when the user simply touches these buttons 23a, 23b without performing the contact movement.

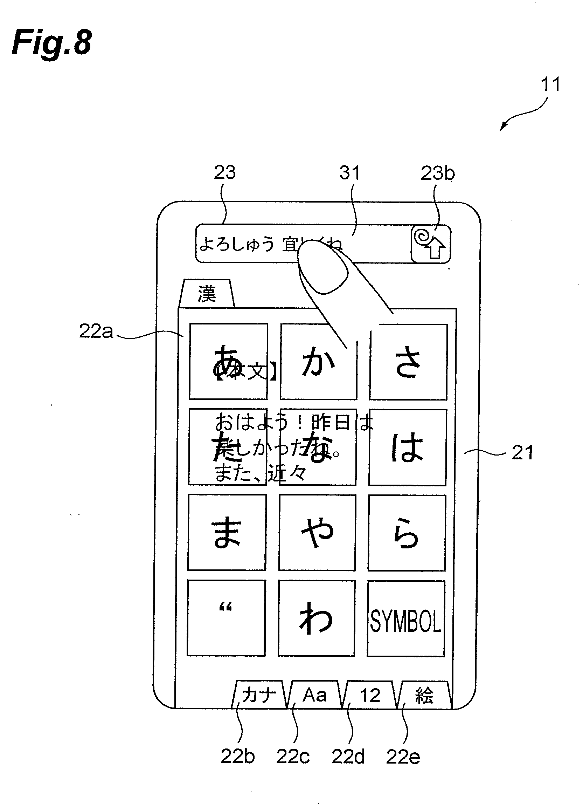

When it is determined in step S109 that the user selects a conversion candidate, the screen display control unit 17 displays the selected conversion candidate on the text sheet 21 and ends the processing. In the example shown in FIG. 8, the character string, " 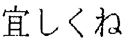 " is selected eventually and thereafter displayed on the text sheet 21.

The functions and effects of the mobile terminal 10 according to the present embodiment are described next. In the mobile terminal 10 according to the present embodiment, the input control unit 15 receives the character data that is input by the user using the touch panel 11, and the conversion candidate creating unit 16 creates the conversion candidate list 31 in response to this character data. The screen display control unit 17 displays the conversion candidate list 31 on the conversion candidate display region 23 of the touch panel 11. When the conversion candidate list 31 cannot be displayed completely on the conversion candidate display region 23, the conversion candidate list 31 on the conversion candidate display region 23 is scroll-displayed in accordance with a contact movement in which the user continuously moves his/her finger on the touch panel 11 without having the contact state therebetween disconnected, during this contact movement.

According to this configuration, when the conversion candidate list 31 created in response to the character data input by the user cannot be displayed completely on the conversion candidate display region 23 of the touch panel 11, the conversion candidate list 31 on the conversion candidate display region 23 is scroll-displayed in accordance with the contact movement of the user, during this contact movement. As a result, the scrolling operation can be performed easily without imposing a restriction on the region or track where a scroll display operation is received. Accordingly, the convenience and operability of the input operation or information display performed by the mobile terminal 10 can be improved.

Moreover, when the conversion candidate list 31 cannot be displayed completely on the conversion candidate display region 23, the screen display control unit 17 displays, on the touch panel 11, the scroll button 23a which is a trigger for starting to scroll-display the conversion candidate list 31 and determines the direction for scroll-displaying the conversion candidate list 31. When the user touches the scroll button, the conversion candidate list 31 on the conversion candidate display region 23 is scroll-displayed in accordance with a contact movement following the contact between the scroll button and the user, during this movement.

According to this configuration, during the contact movement performed by the user, the conversion candidate list 31 displayed on the conversion candidate display region 23 is scroll-displayed in a direction determined by the scroll button 23a. Therefore, even when the user uses any track to contact-move his/her finger on the touch panel 11, the conversion candidate list 31 can be displayed only in a predetermined direction (downward direction, in this example). Accordingly, the convenience and operability of the input operation or information display performed by the mobile terminal 10 can be improved.

In addition, the scrolling direction of the conversion candidate list 31 is selected arbitrarily by using the scroll button 23a and the reverse scroll button 23b. A downward direction is determined by the scroll button 23a as the scrolling direction of the conversion candidate list 31, and an upward direction is determined by the reverse scroll button 23b. These buttons 23a, 23b are switched and displayed when the user touches one of the buttons displayed and removes his/her finger from the touch panel 11. In other words, the next scrolling direction is changed to the reverse direction every time the scrolling operation or button touch operation is performed.

According to this configuration, the conversion candidate list 31 displayed on the conversion candidate display region 23 is scroll-displayed in the downward direction and the upward direction determined by the scroll button 23a and the reverse scroll button 23b. As a result, the user can select any scrolling direction and promptly reach the desired information. Accordingly, the convenience and operability of the input operation or information display performed by the mobile terminal 10 can be improved.

In the mobile terminal 10 of the present invention, the conversion candidate list 31 that is created in accordance with the character data input by the user is scroll-displayed in accordance with the contact movement on the touch panel 11 performed by the user. Therefore, the scroll-displayed conversion candidate list can be effective particularly when creating an electronic mail or performing other character input operations.

Although the above has described a suitable embodiment of the mobile terminal 10 and the information display method using the mobile terminal 10 according to the present invention, the present invention is not limited to this embodiment. For example, the embodiment has described, as an example of the information display method, how the conversion candidates are scroll-displayed in the character input operation. However, the information display method according to the present invention is applicable to other input operation applications and information display applications, such scroll-displaying a web browser using a mobile terminal.

## Claims

1. A mobile terminal having a touch panel, comprising:
input receiving means for receiving input data from a user via the touch panel;
information creation means for creating information corresponding to the input data received by the input receiving means;
information display means for displaying the information created by the information creation means, on a predetermined region of the touch panel; and
display control means for, when the information created by the information creation means cannot be displayed completely on the predetermined region of the touch panel, scroll-displaying the information displayed on the predetermined region, during contact movement in which a finger of the user continues moving on the touch panel without having a contact state therebetween disconnected, in accordance with the contact movement.

2. The mobile terminal according to claim 1, wherein, when the information cannot be displayed completely on the predetermined region of the touch panel, the display control means displays, on the touch panel, a scroll button that serves as a trigger for starting to scroll-display the information and determines a direction for scroll-displaying the information, and, when the user performs a contact operation on the scroll button, scroll-displays the information displayed on the predetermined region, during the contact movement following the contact operation, in accordance with the contact movement.

3. The mobile terminal according to claim 2, wherein the direction for scroll-displaying the information, which is determined by the scroll button, is selected arbitrarily.

4. The mobile terminal according to any one of claims 1 to 3, wherein the input data is character data, and the information is a conversion candidate corresponding to the character data.

5. An information display method that uses a mobile terminal having a touch panel, comprising:
an input receiving step of receiving input data from a user via the touch panel;
an information creation step of creating information corresponding to the input data received in the input receiving step;
an information display step of displaying the information created in the information creation step, on a predetermined region of the touch panel; and
a display control step of, when the information created in the information creation step cannot be displayed completely on the predetermined region of the touch panel, scroll-displaying the information displayed on the predetermined region, during contact movement in which a finger of the user continues moving on the touch panel without having a contact state therebetween disconnected, in accordance with the contact movement.
